# EUROPÄISCHE PATENTANMELDUNG

(11) **EP 0 911 539 A2**
(43) Veröffentlichungstag der Anmeldung: **28.04.1999**
(21) Anmeldenummer: 98119972.2
(22) Anmeldetag: 22.10.1998
(51) Int. Cl.: F16H 3/091

(54) **Doppelkupplungsanordnung für zugkraftunterbrechungsfrei schaltbare Vorgelege-Wechselgetriebe**

(30) Priorität: 27.10.1997 DE 19747332
(71) Anmelder: Ford Global Technologies, Inc., A subsidiary of Ford Motor Company, Dearborn, Michigan 48126 (US)
(72) Erfinder: Körfer, Peter, 50129 Hückelhoven (DE); Fan, Jun, 50259 Pulheim (DE)
(74) Vertreter: Drömer, Hans-Carsten, Dipl.-Ing.

(57) **Zusammenfassung**

Bei einer Doppelkupplungsanordnung für zugkraftunterbrechungsfrei schaltbare Vorgelege-Wechselgetriebe, mit einer für den Anfahrvorgang vorgesehenen ersten Kupplung (3) die mit einer ersten Getriebeeingangswelle (7) verbindbar ist und mit einer für die Überbrückung des Schaltvorganges vorgesehenen zweiten Kupplung (10/11) die mit einer zweiten Getriebeeingangswelle (9) in Form einer Hohlwelle verbindbar ist, die über ein Zahnradpaar (13 und 14) die Vorgelegewelle (8) antreibt, ist die erste Kupplung (3) als Reibscheibenkupplung ausgebildet, über die die erste Getriebeeingangswelle (7) als Zentralwelle antreibbar ist, die zweite Kupplung (10/11) ist als Mehrscheiben-Schlupfkupplung ausgebildet, über die die zweite Getrtiebeeingangswelle (9) als Hohlwelle antreibbar ist und die über ein Zahnradpaar (13/14) die Vorgelegewelle (8) antreibt und die Betätigungseinrichtung (6) ist als ein Zylinder (15) mit zwei einander entgegengesetzt wirkenden Kolben (16 und 17) ausgebildet, die einerseits auf die Anpreß- und Ausrückeinrichtung (5) der ersten Kupplung (3) und andererseits auf die Reibscheiben der zweiten Kupplung (10/11) wirken.

## Beschreibung

Die Erfindung bezieht sich auf eine Doppelkupplungsanordnung für zugkraftunterbrechungsfrei schaltbare Vorgelege-Wechselgetriebe der im Oberbegriff des Patentanspruchs 1 erläuterten Art.

Aus der DE-38 12 327 C2 ist ein Verfahren zum Einstellen eines Doppelkupplungsgetriebes bekannt, wobei die Doppelkupplungsanordnung aus einer für den Anfahrgang vorgesehenen ersten Kupplung, die mit einer ersten Getriebeeingangswelle verbindbar ist und aus einer für die Überbrückung des Schaltvorganges vorgesehenen zweiten Kupplung, die mit einer zweiten Getriebeeingangswelle in Form einer Hohlwelle verbindbar ist, die über ein Zahnradpaar die Vorgelegewelle antreibt, besteht.

Die bekannte Doppelkupplungsanordnung besteht hierbei aus zwei innerhalb eines Umlaufteiles parallel zueinander angeordneten Kupplungen, die eine gleiche Bauform, z.B. in Form von Lamellenkupplungen, aufweisen, von denen jede über eine eigene Betätigungseinrichtung hydraulisch, pneumatisch oder elektromechanisch betätigbar ist.

Die bekannte Doppelkupplungsanordnung weist den Nachteil auf, daß die beiden Betätigungseinrichtungen für die beiden parallel geschalteten Kupplungen in einer entsprechenden aufeinander abgestimmten Weise betätigt werden müssen, um während eines Ablegens der ersten Kupplung und Anlegens der zweiten Kupplung während eines Schaltvorganges eine Zugkraftunterbrechung zu vermeiden. Darüber hinaus sind mehrere schaltbare Freiläufe in einer der Kupplungen und im nachgeschalteten Vorgelege-Wechselgetriebe erforderlich.

Aus der EP 0 088 486 A2 ist ein zugkraftunterbrechungsfrei schaltbares Vorgelege-Wechselgetriebe bekannt, bei dem eine für den Anfahrvorgang vorgesehene erste Kupplung in Form einer Reibscheibenkupplung über eine Ausrückeinheit betätigbar ist und eine direkt mit dem Antriebsmotor über eine Zentralwelle verbundene für die Überbrückung des Schallvorganges vorgesehene zweite Reibscheibenkupplung am Ende des Getriebes angeordnet ist, die über ein Zahnradpaar die Vorgelegewelle antreibt.

Bei diesem bekannten zugkraftunterbrechungsfrei schaltbaren Vorgelege-Wechselgetriebe liegt somit auch eine Doppelkupplungsanordnung vor, die zwar räumlich voneinander getrennt ist, die jedoch wieder in einer aufeinander abgestimmten Art und Weise betätigt werden muß, um eine Zugkraftunterbrechung während eines Schallvorganges zu vermeiden.

Aus der EP 0 173 119 B1 ist ein zugkraftunterbrechungsfrei schaltbares Vorgelege-Wechselgetriebe bekannt, bei dem der Antriebsmotor über eine Dämpfungskupplung und eine Art Zentralwelle mit einer Kupplungsanordnung in Form einer Lamellenkupplung am Ende des Getriebes verbunden ist über die eine Hohlwelle des Getriebes antreibbar ist, die über ein Zahnradpaar mit der Vorgelegewelle treibend verbindbar ist.

Bei diesem zugkraftfrei schaltbaren Vorgelege-Wechselgetriebe wird für den Anfahrvorgang und für das Überbrücken eines Schaltvorganges die eine als Mehrscheiben-Lamellenkupplung ausgebildete Hauptkupplung im Zusammenhang mit entsprechend geschalteten Synchronkupplungen verwendet.

Auch hier ist wieder ein abgestimmtes Betätigen der Hauptkupplung im Zusammenwirken mit den entsprechenden Synchronkupplungen erforderlich.

Aus der EP 0 584 316 B1 ist eine Anordnung einer zweifachen lösbaren Kupplung bekannt, bei der eine der Kupplungen durch Federkraft und die andere der Kupplungen durch Hydraulikdruck angelegt bzw. gelöst wurden.

Bei dieser Doppelkupplung handelt es sich um eine im Getriebe angeordnete Doppelkupplung, die unabhängig von einer noch vorgesehenen Anfahrkupplung ist.

Die Aufgabe der Erfindung ist es, eine Doppelkupplungsanordnung für zugkraftunterbrechungsfrei schaltbare Vorgelege-Wechselgetriebe der im Oberbegriff des Patentanspruchs 1 erläuterten Art derart zu gestalten, daß ein aufwendiges abgestimmtes Betätigen von zwei Kupplungen vermieden wird.

Gemäß der Erfindung wird diese Aufgabe gelöst, indem eine Doppelkupplungsanordnung für zugkraftunterbrechungsfrei schaltbare Vorgelege-Wechselgetriebe der im Oberbegriff des Patentanspruchs 1 erläuterten Art, die im Kennzeichenteil des Patentanspruchs 1 aufgezeigten Merkmale aufweist.

Dadurch, daß die erste Kupplung als Anfahr-Reibscheibenkupplung ausgebildet ist, über die die erste Getriebeeingangswelle als Zentralwelle antreibbar ist und die zweite Kupplung als Mehrscheiben-Schlupfkupplung ausgebildet ist, über die die zweite Getriebeeingangswelle als Hohlwelle antreibbar ist, von der über ein Zahnradpaar die Vorgelegewelle mit einer Übersetzung angetrieben wird und die Betätigungseinrichtung für die erste Kupplung und die zweite Kupplung aus einem gehäusefesten Zylinder mit zwei einander entgegengesetzt bewegbaren Kolben ausgebildet ist, deren einer auf die Ausrückanordnung der ersten Kupplung und deren anderer auf die Einrückanordnung der zweiten Kupplung einwirkt, wird mit einer äußerst kompakt bauenden Betätigungseinrichtung für die beiden Kupplungen ein unmittelbar aufeinander abgestimmtes Anlegen der ersten Kupplung und Ablegen der zweiten Kupplung, bzw. Ablegen der ersten Kupplung und Anlegen der zweiten Kupplung erzielt.

Die Erfindung wird anhand eines in den beigefügten Zeichnungen gezeigten Ausführungsbeispieles näher erläutert. Es zeigt:
- Fig. 1: ein Getriebeschaubild mit der erfindungsgemäßen Doppelkupplungsanordnung und
- Fig.2: eine schematische Darstellung der Betätigungseinrichtung der erfindungsgemäßen Doppelkupplung.

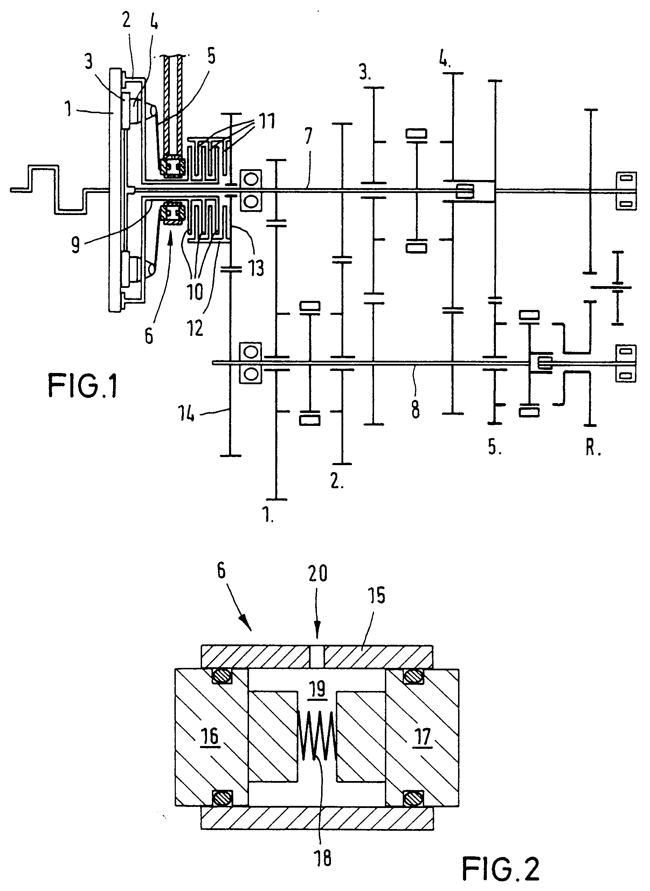

Bei der in Fig. 1 gezeigten erfindungsgemäßen Doppelkupplungsanordnung ist die für den Anfahrvorgang vorgesehene erste Kupplung als eine im Kraftfahrzeugbau übliche Reibscheibenkupplung ausgebildet. An einer mit einem Antriebsmotor verbundenen Schwungscheibe 1 ist in an sich bekannter Weise ein Kupplungskorb 2 drehfest angeordnet und nimmt in seinem inneren eine Reibscheibe 3 auf, die über eine Anpreßplatte 4 und eine Anpreß- und Ausrückeinrichtung 5 zumeist in Form einer großflächigen Tellerfederscheibe in Reibungseingriff mit der Schwungscheibe 1 bringbar ist.

Die erste Reibscheibenkupplung wird über eine Betätigungseinrichtung 6 an- und abgelegt, die auf die Anpreß- und Ausrückeinrichtung 5 einwirkt, wobei eine Hebeanordnung zumeist durch die radialen nach innen ragenden Zungen der großflächigen Tellerfederscheibe gebildet werden.

Die Reibscheibe 3 ist hierbei in an sich bekannter Weise mit ihrem Scheibenteil drehfest und treibend mit einer ersten Getriebeeingangswelle 7 verbunden. Das Vorgelege-Wechselgetriebe besteht hierbei im wesentlichen aus der Getriebeeingangswelle 7 und der Vorgelegewelle 8, wobei diese bei einer Transaxel-Anordnung auch die Ausgangswelle des Wechselgetriebes bildet.

Die als Reibscheibenkupplung ausgebildete erste Kupplung unterscheidet sich gemäß der Erfindung von den in üblicher Weise in Kraftfahrzeugen verwendeten Reibscheibenkupplungen nur dadurch, daß der Kupplungskorb 2 radial innen mit einer Hohlwelle 9 verbunden ist, die die Eingangswelle 7 konzentrisch umfaßt und an der ein erster Satz von Reibscheiben 10 drehfest und axial verlagerbar angeordnet sind, die zwischen einem zweiten Satz von Reibscheiben 11 angeordnet sind, deren Außenumfang drehfest und axial verlagerbar mit einem Trommelbauteil 12 verbunden sind.

Das Trommelbauteil 12 ist drehfest mit einem Zahnrad 13 versehen, das auf der Getriebeeingangswelle 7 drehbar gelagert ist und in Eingriff mit einem Zahnrad 14 steht, das drehfest auf der Vorgelegewelle 8 angeordnet ist.

Die gehäusefest angeordnete Betätigungseinrichtung 6 ist in Fig. 2 schematisch dargestellt und besteht im wesentlichen aus einem Zylinder 15, in dem zwei entgegengesetzt zueinander bewegbare Kolben 16 und 17 unter Zwischenschaltung einer Rückführfeder 18 angeordnet sind.

Der Druckraum 19 zwischen den beiden Kolben 16 und 17 kann über eine Zufuhrleitung 20 mit Druckmittel beaufschlagt werden.

Die Hebeanordnung der Anpreß- und Ausrückeinheit 5 kann mit der Drehmomentübertragungsfähigkeit der Mehrscheiben-Schlupfkupplung 10/11 derart aufeinander abgestimmt werden, daß bei einer Druckbeaufschlagung der Betätigungseinheit 6, bei der die erste Kupplung vollständig ausgerückt wird, die zweite Kupplung mit soviel Drehmomentübertragungs-Schlupf eingerückt wird, daß während eines Schallvorganges eine Zugkraftunterbrechung nicht auftritt.

Es ist selbstverständlich, daß die Betätigungseinrichtung 6 z.B. aus einer Vielzahl von konzentrisch zueinander liegend angeordneten Einzelzylindern ausgeführt werden kann, oder aber auch als ein die Eingangswelle 7 und die Hohlwelle 9 umfassender Ringzylinder ausgebildet sein kann.

Ebenso ist die Ausführung der ersten Kupplung nicht auf eine Einfachreibscheibenkupplung beschränkt, sondern es kann selbstverständlich auch, falls erforderlich, eine Mehrscheibenkupplung angeordnet werden. Das gleiche gilt auch für die Mehrscheiben-Schlupfkupplung 13, die selbstverständlich auch eine andere geeignete Bauform aufweisen kann.

Das der erfindungsgemäßen Doppelkupplungsanordnung nachgeschaltete Vorgelege-Wechselgetriebe kann unterschiedliche Ausführungsformen aufweisen, wie sie z.B. aus dem eingangs aufgezeigten Stand der Technik oder aber aus der von dem Anmelder vor kurzem erlangten Patentanmeldung 196 14 930.C1 bekannt sind.

## Patentansprüche

1. Doppelkupplungsanordnung für zugkraftunterbrechungsfrei schaltbar Vorgelege-Wechselgetriebe, mit einer für den Anfahrvorgang vorgesehenen ersten Kupplung (3), die mit einer ersten als Zentralwelle ausgebildeten Getriebeeingangswelle (7) verbindbar ist und mit einer für die Überbrückung des Schaltvorganges vorgesehenen zweiten Kupplung (10/11) die mit einer zweiten als Hohlwelle ausgebildeten Getriebeeingangswelle (9) verbindbar ist, die über ein Zahnradpaar (13/14) die Vorgelegewelle (8) antreibt,
**dadurch gekennzeichnet,** daß
- die erste Kupplung (3) als Reibscheibenkupplung ausgebildet ist,
- die zweite Kupplung (10/11) als Mehrscheiben-Schlupfkupplung ausgebildet ist und das Zahnradpaar (13/14) die Vorgelegewelle (8) mit einer Übersetzung antreibt und
- die Betätigungseinrichtung (6) aus einem Zylinder (15) besteht, in dem zwei einander entgegengesetzt betätigbarer Kolben (16 und 17) mit einer Rückführfeder (18) ausgebildet ist, von denen einer auf die Anpreß- und Ausrückeinrichtung (5) der ersten Kupplung (3) und der andere auf die Einrückeinrichtung der zweiten Kupplung (10/11) einwirkt.
